# EUROPEAN PATENT APPLICATION

(11) **EP 4 387 170 A1**
(43) Date of publication of application: **19.06.2024**
(21) Application number: 23217129.8
(22) Date of filing: 15.12.2023
(51) Int. Cl.: H04L 9/40, H04W 12/03, H04W 12/088

(54) **REACTIVE NETWORK SECURITY FOR A BUILDING AUTOMATION SYSTEM**

(30) Priority: 15.12.2022 US 202263387626 P
(71) Applicant: Trane International Inc., Davidson, NC 28036 (US)
(72) Inventor: DAYALAN, Udhaya Kumar, Lino Lakes, Minnesota, 55038 (US); SIVAGNANAM, Mangayarkarasi, Vadnais Heights, Minnesota, 55127 (US); MEYERS, Brian, Woodbury, Minnesota, 55129 (US)
(74) Representative: Haseltine Lake Kempner LLP

(57) **Abstract**

A method provides reactive network security of a building automation system that includes a controller and a network of electronic devices connected in electronic communication. The method includes monitoring, by the controller, external electronic communications received by the network. The monitoring includes comparing, by the controller, a traffic property of the external electronic communications to a corresponding baseline traffic property. The method also includes instituting a traffic communication protocol based on said comparison. Said instituting of the traffic communication protocol causes one or more of restricting of type of incoming external electronic communication to the network, using a virtual private network to communicate within the network, and encrypting of the electronic communication within the network. A building automation system includes a controller, a plurality of electronic devices, and a network. The plurality of electronic devices and the controller are in electronic communication via the network.

## Description

### FIELD

This disclosure relates generally to a building automation system. More specifically, this disclosure relates to network security of the electronic devices within the building automation system.

### BACKGROUND

A building automation system is a computerized network of electronic devices that can be configured to control one or more systems such as, but not limited to, mechanical, electrical, lighting, and security systems of a building. A building automation system can be configured to control a heating, ventilation, air conditioning, and refrigeration (HVACR) system and associated components for a building. A user, such as, but not limited to, a facility manager, a building maintenance engineer, or the like, typically interacts with the building automation system via one or more computers that are networked with a variety of equipment controllers and sensors. The user may also be able to interact with the building automation system via one or more mobile devices such as, but not limited to, a cellular phone, a tablet, or the like.

### BRIEF SUMMARY

In an embodiment, a method is directing to providing reactive network security for a building automation system. The building automation system includes a controller and a network of electronic devices connected in electronic communication. The method includes monitoring, by the controller, external electronic communications received by the network. Said monitoring includes comparing, by the controller, at least one traffic property of the external electronic communications to a corresponding baseline traffic property. The method also includes instituting, by the controller, a traffic communication protocol for at least one of the controller and the electronic devices based on said comparison. Said institution of the traffic communication protocol causes one or more of restricting of at least one type of incoming external electronic communication to the network, using a virtual private network to communicate within the network, and encrypting of the electronic communication within the network.

In an embodiment, the monitoring, by the controller, of the external electronic communications includes determining, by the controller, the at least one traffic property of the electronic communications.

In an embodiment, the monitoring, by the controller of the external electronic communications is continuous monitoring.

In an embodiment, a primary function of the controller is operating the building automation system.

In an embodiment, the restricting of the type of incoming electronic communication includes restricting incoming external electrical communications initiated by a software application that caused a portion of the external electrical communications monitored by the controller, enabling an inbound traffic rule for incoming external electrical communications based on the at least one traffic property, enabling a dynamic restriction of at least one external internet protocol address, port, and protocol that corresponds to the electrical communications monitored by the controller, enabling or modifying a firewall protection based on the at least one traffic property, and/or enabling a bandwidth limitation for an electric device that is one of the electronic devices in the network and an external electronic device that transmitted at least a portion of the external electrical communications monitored by the controller.

In an embodiment, the at least one traffic properties of the electronic communications is metadata of the external electronic communications.

In an embodiment, the instituting, by the controller, of the traffic communication protocol is in response to the at least one traffic property of the external electronic communications exceeding the corresponding baseline traffic property by a predetermined amount.

In an embodiment, the instituting, by the controller, of the traffic communication protocol is configured to reduce the at least one traffic property to no longer exceed the corresponding baseline traffic property by the predetermined amount.

In an embodiment, the at least one traffic property of the electronic communications includes a count of the electronic communications received by one of the electronic devices in a preceding time period. The corresponding baseline traffic property is an expected total of the electronic communications received by the one of the electronic devices in said time period. The instituting of the traffic communication protocols is in response to the count of the electronic communications received by one of the electronic devices exceeding the expected total of the electronic communications received by the one of the electronic devices by the predetermined amount.

In an embodiment, a building automation system includes a controller, a plurality of electronic devices, and a network. The plurality of electronic devices and the controller are in electronic communication via the network. The controller is configured to monitor external electronic communications received by the network. Said monitoring includes comparing at least one traffic property of the external electronic communications to a corresponding baseline traffic property. The controller is also configured to institute a traffic communication protocol for at least one of the controller and the electronic devices based on said comparison. Said institution of the traffic communication protocol causes one or more of restricting of at least one type of incoming external electronic communication to the network, using a virtual private network to communicate within the network, and encrypting of the electronic communication within the network.

In an embodiment, the monitoring, by the controller, of the external electronic communications includes the controller determining the at least one traffic property of the electronic communications.

In an embodiment, the controller is configured to continuously monitor the external electronic communications received by the network.

In an embodiment, a primary function of the controller is operating the building automation system.

In an embodiment, the controller is configured to institute the traffic communication protocol to at least cause the restricting of the type of incoming electronic communication. The restricting of the type of incoming electronic communication includes restricting incoming external electrical communications initiated by a software application that causes a portion of the external electrical communications during the monitoring by the controller, enabling an inbound traffic rule for incoming external electrical communications based on the at least one traffic property, dynamic restriction of at least one external internet protocol address, port, and protocol that corresponds to the electrical communications monitored by the controller, enabling or modifying a firewall protection based on the at least one traffic property, and/or enabling a bandwidth limitation for an electric device that is one of the electronic devices in the network and an external electronic device that transmits at least a portion of the external electrical communications during the monitoring by the controller.

In an embodiment, the at least one traffic properties of the electronic communications is metadata of the external electronic communications.

In an embodiment, the controller is configured to provide the instituting of the traffic communication protocol in response to the at least one traffic property of the external electronic communications exceeding the corresponding baseline traffic property by a predetermined amount.

In an embodiment, the instituting, by the controller, of the traffic communication protocol is configured to reduce the at least one traffic property to no longer exceed the corresponding baseline traffic property by the predetermined amount.

In an embodiment, the at least one traffic property of the electronic communications includes a count of the electronic communications received by one of the electronic devices in a preceding time period. The corresponding baseline traffic property is an expected total of the electronic communications received by the one of the electronic devices in said time period. The instituting is in response to the count of the electronic communications received by the one of the electronic devices exceeding the expected total of the electronic communications received by the one of the electronic devices by the predetermined amount.

### BRIEF DESCRIPTION OF THE DRAWINGS

References are made to the accompanying drawings that form a part of this disclosure and which illustrate the embodiments in which methods and systems described in this specification can be practiced.
Figure 1 illustrates a schematic diagram of an embodiment of a system including a building automation system.
Figure 2 is a schematic diagram of the system control unit 102a in Figure 1, according to an embodiment.
Figure 3A illustrates a flowchart of an embodiment of a method for providing reactive network security for a building automation system.
Figure 3B illustrates a schematic diagram of a monitoring of external electronic communications in the method of Figure 3A, according to an embodiment.
Figure 3C illustrates a schematic diagram of an instituting of a traffic communication protocol in the method of Figure 3A, according to an embodiment.

Like reference numbers represent like parts throughout.

### DETAILED DESCRIPTION

This disclosure relates generally to a building automation system. More specifically, this disclosure relates to network security management of the electronic devices within the building automation system.

A building automation system is a computerized network of electronic devices that can be configured to control one or more systems such as, but not limited to, mechanical, electrical, lighting, and security systems of a building. A building automation system can be configured to control a heating, ventilation, and air conditioning (HVAC) system and its components for a building.

A controller of the building automation system may be connected to the Internet and prone to various types of cyberattacks. If the electronic devices in the building automation system are not securely configured, an attacker can benefit from these search results to exploit security vulnerabilities of the electronic devices and attempt to compromise controllers connected to the Internet. Further, an attacker that compromises a controller of the building automation system may be able to further compromise other controllers and other electronic devices, such as local servers, on the network of the building automation system via the compromised controller.

The controller may be configured to control a heating, ventilation, air conditioning, and refrigeration (HVACR) system of the building and optionally may be configured to control associated components of the building.

The following definitions are applicable throughout this disclosure. As defined herein, the term "firewall" may refer to a system (e.g., a hardware system, a software system, or a combination of both) designed to prevent unauthorized access to or from a private network. A firewall typically establishes a barrier between a trusted network and an untrusted network, such as the Internet. Firewalls prevent unauthorized Internet users from accessing private networks connected to the Internet. A firewall may refer to a network security system that monitors and controls incoming and outgoing network traffic based on predetermined security rules.

As defined herein, the term "BACnet" may refer to a communication protocol for Building Automation and Control (BAC) networks that leverage the American Society of Heating, Refrigerating and Air-Conditioning Engineers (ASHRAE), American National Standards Institute (ANSI), and International Organization for Standardization (ISO) 16484-5 standard protocol. BACnet allows communication of building automation and control systems for applications such as HVACR, lighting control, access control, and/or fire detection systems and their associated equipment. The BACnet protocol may provide mechanisms for computerized building automation devices to exchange information.

As defined herein, the term "BBMD" may refer to a BACnet/IP Broadcast Management Device used to distribute BACnet broadcast messages throughout a BACnet/IP network consisting of interconnected Transmission Control Protocol/Internet Protocol (TCP/IP) sub-networks. A BBMD may forward BACnet/IP broadcast messages sent by devices connected to its subnet to peer BBMDs. The term "BDT" may refer to a broadcast distribution table that is a list of the BBMDs on the network.

As defined herein, the term "egress" or "egress filtering" may refer to monitoring and potentially restricting the flow of information outbound from one network to another. For example, information from a private network (e.g., a BACnet network, etc.) to the Internet may be controlled and restricted. Data being sent out of the private network are examined via a router, firewall, or similar edge device. Data that does not meet security policies are not allowed to leave the private network - they are denied "egress". Egress filtering may help ensure that unauthorized or malicious traffic never leaves the private network.

As defined herein, the term "cipher" or "cipher suite" may refer to sets of algorithms that help secure a network connection through Secure Sockets Layer (SSL) or Transport Layer Security (TLS). A cipher suite may provide essential information on how to communicate secure data when using Hypertext Transfer Protocol Secure (HTTPS), File Transfer Protocol Secure (FTPS), Simple Mail Transfer Protocol (SMTP) and other network protocols. The term "certificate" may refer to a digital certificate used for authenticating the server and/or client in the network using e.g., a cipher suite.

As defined herein, the term "real-time" or "real time" may refer to various operations in computing or other processes that must guarantee response times within a predetermined or specified time (deadline), usually a relatively short time. A real-time process is generally a process that happens in a predefined time including steps of maximum duration and is fast enough to affect the environment in which the process occurs.

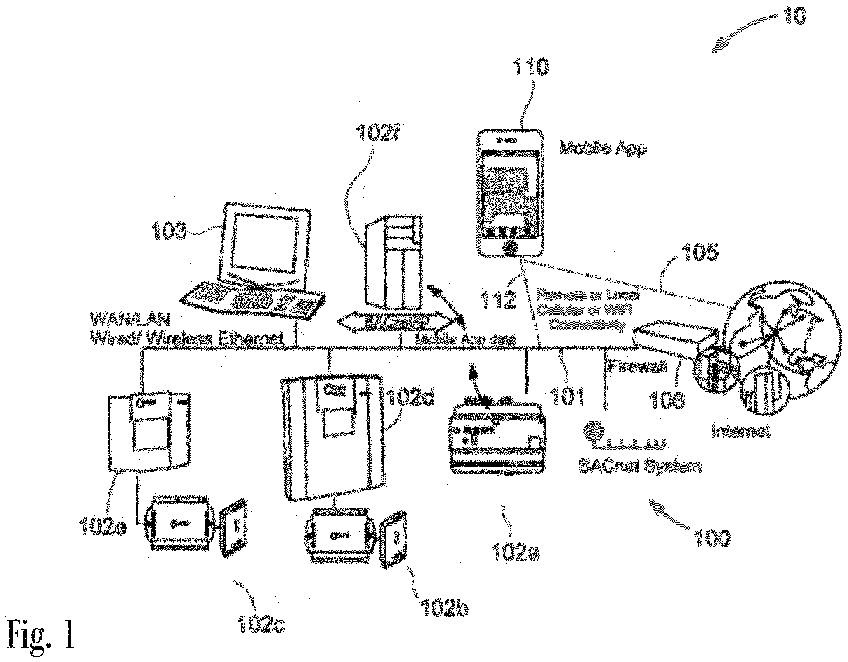

Figure 1 is a schematic diagram of an embodiment of a system 10 including a building automation system 100. The building automation system 100 includes a computer 103 specialized to carry out the methods described herein. The computer 103 is connected to a network 101. In an embodiment, the computer 103 can be hardwired to the network 101. In an embodiment, the computer 103 can be wirelessly connected to the network 101.
The network 101 uses a communication standard or protocol to link various subsystems throughout the building automation system 100. For example, the network 101 links a system control unit (system controller) 102a, a unit control device (unit controller) 102b, a unit control device (unit controller) 102c, and other electronic devices 102d, 102e, 102f. The network 101 can provide system-wide user access and control from the computer 103. The network 101 can also be connected to the cloud via wireless connection such as a cellular connection.

In an embodiment, the system control unit 102a can be referred to as a master controller for the building automation system 100. In an embodiment, the unit controller 102b is configured to control e.g., the device 102d. The unit controller 102c is configured to control e.g., the device 102e. The master controller is configured to communicate with the unit controllers (102b, 102c) and is configured to control any or all of the devices in the building automation system 100 either directly or indirectly (e.g., through the unit controllers 102b and/or 102c). In an embodiment, the electronic device 102f may be a local server 102f. For example, the electronic device 102f may be a local enterprise server.

In an embodiment, the network 101 can utilize a variety of different communication protocols. Examples of suitable communication protocols for the network 101 include, but are not limited to, TCP/IP, BACnet, LonTalk, Modbus, ZigBee, Zwave, Wi-Fi, Standard Interface for Multiple Platform Link Evaluation (SIMPLE), Bluetooth, Secure Shell (SSH), or the like. The computer 103 can represent a variety of electronic devices. For example, the computer 103 can have a display device and an input device. In an embodiment, the computer 103 can be a desktop computer, a laptop computer, a tablet, a cellular phone (e.g., a smart phone or the like), a personal digital assistant, a local display, a kiosk mode enabled smart device (e.g., television, tablet, or the like), or other suitable electronic device.

The building automation system 100 is connected in electronic communication with the Internet 105. A network security device 106 is included between the Internet 105 and the network 101 of the building automation system 100. The network security device 106 can be, for example, a firewall, cellular router, bridge, or the like, that secures and protects the building automation system 100 from unwanted intrusion via the Internet 105.

As shown in Figure 1, a mobile device 110 is connected to the building automation system 100 via, for example, the Internet 105 through the network security device 106. The mobile device 110 can alternatively be referred to as a user device. The mobile device 110 is not part of the building automation system 100. The mobile device 110 can connect to the building automation system 100 via a local wireless connection 112. The local wireless connection 112 can be established behind the network security device 106 so that the mobile device 110 can connect to one or more of the components or devices 102a-102f of the building automation system 100 without requiring communication between the mobile device 110 and the building automation system 100 to go through the network security device 106. This can, for example, increase the speed of the communication between the mobile device 110 and the building automation system 100. In an embodiment, the mobile device 110 can be connected to the building automation system 100 via a wired connection.

The mobile device 110 can connect to the building automation system 100 via the Internet 105 using, for example, cellular, 3G, 4G, 5G, or other wireless communication protocols. The mobile device 110 can connect to the building automation system 100 via the local wireless connection 112 using, for example, Wi-Fi, Bluetooth, or other wireless communication protocols. The mobile device 110 can connect to the building automation system 100 using, for example, a combination of the Internet 105 and the local wireless connection 112. A connection can be formed between the building automation system 100 and the Internet 105 through the mobile device 110 (e.g., via a wired/wireless connection between the Internet 105 and the mobile device 110 and a local connection between the mobile device 110 and the building automation system 100).

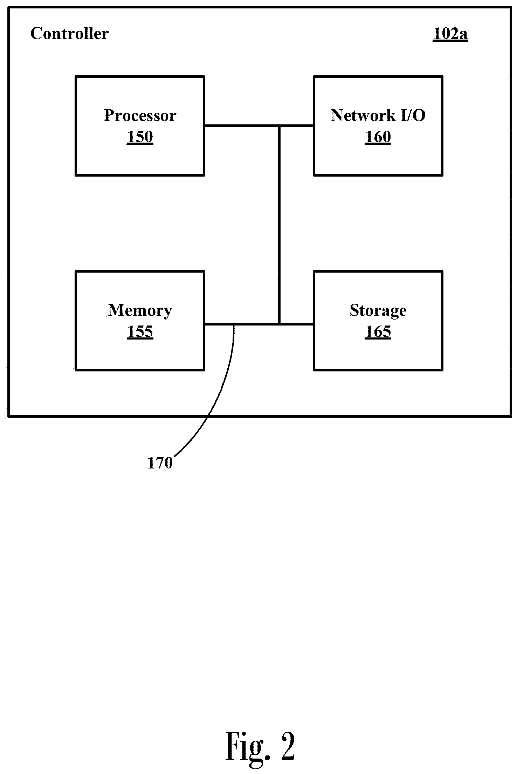

Figure 2 is a schematic diagram of the system control unit 102a in Figure 1, according to an embodiment. The system control unit 102a is generally representative of hardware aspects of a controller for the building automation system 100 in Figure 1. In an embodiment, the other control units in Figure 1 may have hardware aspects similar to those discussed below for the system control unit 102a. The system control unit 102a is an example and is not intended to be limiting.

The system control unit 102a includes a processor 150, a memory 155, a network input/output 160, and storage 165. It is to be appreciated that the system control unit 102a can include one or more additional components.

The processor 150 can retrieve and execute programming instructions stored in the memory 155 and/or the storage 165. The processor 150 can also store and retrieve application data residing in the memory 155. The processor 150 can be a single processor, multiple processors, co-processors, or a single processor having multiple processing cores. In some embodiments, the processor 150 can be a single-threaded processor. In some embodiments, the processor 150 can be a multi-threaded processor.

An interconnect 170 is used to transmit programming instructions and/or application data between the processor 150, the memory 155, the storage 165, and the network input/output 160. The interconnect 170 can, for example, be one or more busses or the like.

In an embodiment, the system control unit 102a may have a relatively limited amount of storage 165. The primary function of the system control unit 102a is to operating the building automation system 100.

The memory 155 is generally included to be representative of a random access memory such as, but not limited to, Static Random Access Memory (SRAM), Dynamic Random Access Memory (DRAM), Flash, suitable combinations thereof, or the like. In some embodiments, the memory 155 can be a volatile memory. In some embodiments, the memory 155 can be a nonvolatile memory.

The network input/output 160 can include wired and/or wireless connections. The network input/output 160 is configured to transmit data via the network 101. In an embodiment, the network input/output 160 can also be configured to transmit data via the Internet 105. In an embodiment, the network input/output 160 can transmit data via the network 101 through a wireless connection using Wi-Fi, Bluetooth, BACnet, LonTalk, Modbus, ZigBee, Zwave, or the like, or other suitable wireless communication protocols. In an embodiment, the network input/output 160 can transmit data via a wire line, an optical fiber cable, or the like. It is to be appreciated that the network input/output 160 can communicate through the network 101 or through the Internet 105 through suitable combinations of the preceding wired and wireless communication methods. The network 101 can also be connected to the cloud via a wireless connection such as a cellular connection.

In an embodiment, the system control unit 102a can include one or more other features. For example, in an embodiment, the system control unit 102a can include a co-processor configured to drive an on-board display.

Aspects described herein can be embodied as a system, method, or computer readable medium. In an embodiment, the aspects described can be implemented in hardware, software (including firmware or the like), or combinations thereof. Some aspects can be implemented in a computer readable medium, including computer readable instructions for execution by a processor. Any combination of one or more computer readable medium(s) can be used.

The computer readable medium can include a computer readable signal medium and/or a computer readable storage medium. A computer readable storage medium can include any tangible medium capable of storing a computer program for use by a programmable processor to perform functions described herein by operating on input data and generating an output. A computer program is a set of instructions that can be used, directly or indirectly, in a computer system to perform a certain function or determine a certain result.

Examples of computer readable storage media include, but are not limited to, a floppy disk; a hard disk; a random access memory (RAM); a read-only memory (ROM); a semiconductor memory device such as, but not limited to, an erasable programmable read-only memory (EPROM), an electrically erasable programmable read-only memory (EEPROM), Flash memory, or the like; a portable compact disk read-only memory (CD-ROM); an optical storage device; a magnetic storage device; other similar device; or suitable combinations of the foregoing.

A computer readable signal medium can include a propagated data signal having computer readable instructions. Examples of propagated signals include, but are not limited to, an optical propagated signal, an electro-magnetic propagated signal, or the like. A computer readable signal medium can include any computer readable medium that is not a computer readable storage medium that can propagate a computer program for use by a programmable processor to perform functions described herein by operating on input data and generating an output.

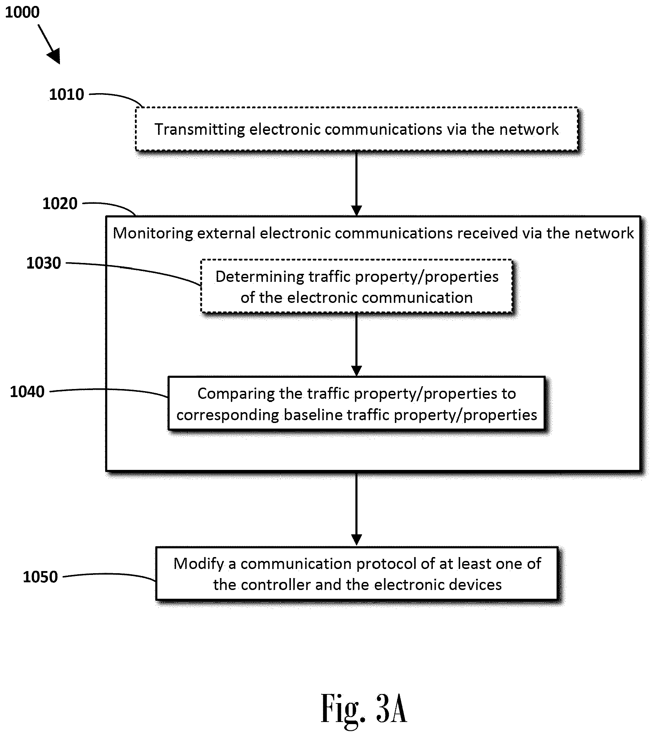

Figure 3A illustrates a flowchart of an embodiment of a method 1000 for providing reactive network security of a building automation system. For example, the method 1000 may provide reactive network security in the building automation system 100 in Figure 1. In an embodiment, the method 1000 may be performed by the system control unit 102a, the unit control device 102b, and/or the unit control device 102c of the building automation system 100. In an embodiment, each of the system control unit 102a, the unit control device 102b, and/or the unit control device 102c may be configured to perform the method 1000. The method 1000 begins at 1010.

At 1010, electronic communications are transmitted via the network (e.g., network 101) of the building automation system. The controller(s) (e.g., system control unit 102a, unit control device 102b, unit control device 102c) and the other electronic devices (e.g., electronic device 102f, computer 103) transmit electronic communications through the network. The controller(s) can communicate with each other through the network (e.g., transmit electronic communications to the network's other controller(s) via the network). For example, a master controller of the building automation system (e.g., system controller unit 102a) communicates with other unit controller(s) in the building automation system (e.g., unit control device 102b, unit control device 102c) via the network (e.g., transmit electronic communications between the master controller and other controller(s) via the network).

The electronic communications transmitted via the network at 1010 includes the controller(s) and the other electronic devices receiving external electronic communications via the network. External electronic communications are electronic communications that are transmitted/originate from outside of the building automation system. For example, external electronic communications are transmitted from one or more electronic devices that are external to the building automation system (e.g., a remote computer connected to the Internet 105, mobile). The external electronic communications can be received from the Internet (e.g., Internet 105) and/or from a local external electronic device (e.g., mobile device 110). Such external electronic communications can include external electronic communications received by the network directly from the Internet (e.g., via a network security device 106) and/or sent indirectly from the Internet (e.g., via a local external electronic device, via the mobile device 110). For example, external electronic communications sent indirectly from the Internet via a local remote electronic device can include an external electronic communication routed through the local remote device to the network and/or external electronic communications transmitted from the local remote electronic device to the network that are initiated by electronic communication(s) sent from the Internet to the local electronic device (e.g., Internet's electronic communication(s) initiating the remote local electronic device to transmit a series of external electronic communications to the network). The method 1000 then proceeds from 1010 to 1020.

At 1020, external electronic communications received by the network are monitored. Such external electronic communications are received by the controller and/or the other electronic devices via the network. For example, the controller is configured at 1020 to monitor external electronic communications received by the network. The controller can monitor all of the external electronic communications transmitted via the network (e.g., all of the external electronic communications received by any one of the controller(s) and the electronic devices). In an embodiment, the external electronic communications are communicated from the Internet to the network through at least one of hypertext transfer protocol ("HTTP") and through a secure hypertext transfer protocol ("HTTPS"). The controller can monitor the overall traffic of external electronic communications in the network. In an embodiment, the monitoring of the external electronic communications at 1020 is continuous monitoring. A controller can continuously monitor said external communications so to avoid missing a network attack and to quickly react to defend the network.

In an embodiment, the controller may be configured monitor the external electronic communications received at 1020 using a network security device of the network (e.g., the network security device 106). For example, the external electronic communications are analyzed/monitored by the network security device as said external electronic communications pass through the network security device to reach the network, and the network security device electronically communicates its monitoring to the controller via the network. The network security device may monitor its HTTP/HTTPS port(s) (e.g., the one or more HTTP ports of the network security device, the one or more HTTPS ports of the network security device) to monitor the external electronic communications received by the network.

In an embodiment, the controller may be configured to monitor the external electronic communications received at 1020 using the other electronic devices in the network. For example, each of the controller and the other electronic devices is configured to self-monitor its own received external electronic communications, and the other electronic devices report its self-monitoring to the controller. In such an embodiment, the controller may determine the overall traffic of the external electronic communications by combining the self-monitoring from all of the electronic devices in the network.

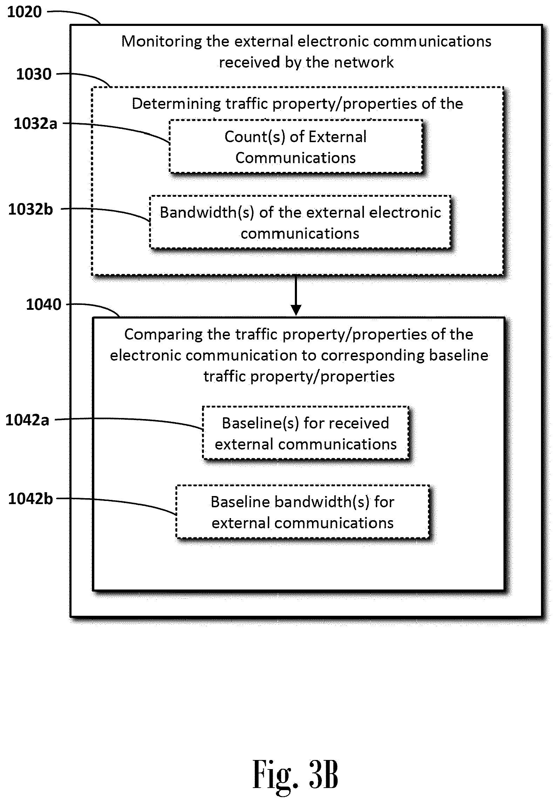

As shown in Figure 3A, the monitoring of external electronic communications at 1020 can include 1030 and 1040. At 1030, one or more traffic properties of the external electronic communications is determined. For example, monitoring by the controller at 1020 as described above includes determining traffic property/properties of the external electronic communications received by the network. The method 1000 then proceeds from 1030 to 1040. At 1040, the traffic property/properties of the external electronic communications are compared to corresponding baseline traffic property/properties. The traffic property determination at 1030 and the traffic property comparison at 1040 are discussed in more detail below with respect to Figure 3B. The method 1000 then proceeds from 1020 to 1050.

At 1050, a traffic communication protocol for at least one of the controller and/or the electronic devices is instituted based on the comparison at 1050. The traffic communication protocol can include one or more rules, restrictions, actions, and the like for electronically communicating in the network. The traffic communication protocol are instructions/rules additional to any other protocol(s) already being used for electronic communication via the network (e.g., TCP/IP, BACnet, LonTalk, Modbus, ZigBee, Zwave, Wi-Fi, Standard Interface for Multiple Platform Link Evaluation (SIMPLE), Bluetooth, Secure Shell (SSH), or the like). The controller may institute the traffic communication protocol by sending instructions for the traffic communication protocol to the other electronic devices in the work (e.g., via the network). For example, the controller may send instructions for the traffic communication protocol to a network security device, which cause the network security device to enact the rules, restrictions, actions, or the like of the traffic communication protocol. The traffic communication protocol is configured to change how one or more electronic devices in the network treat incoming electronic communications. In an embodiment, the initiation of the traffic communication protocol does not cause any of the electronic devices to modify the content (e.g., text in the electronic communications, images in the electronic communications, and the like) of received electronic communications.

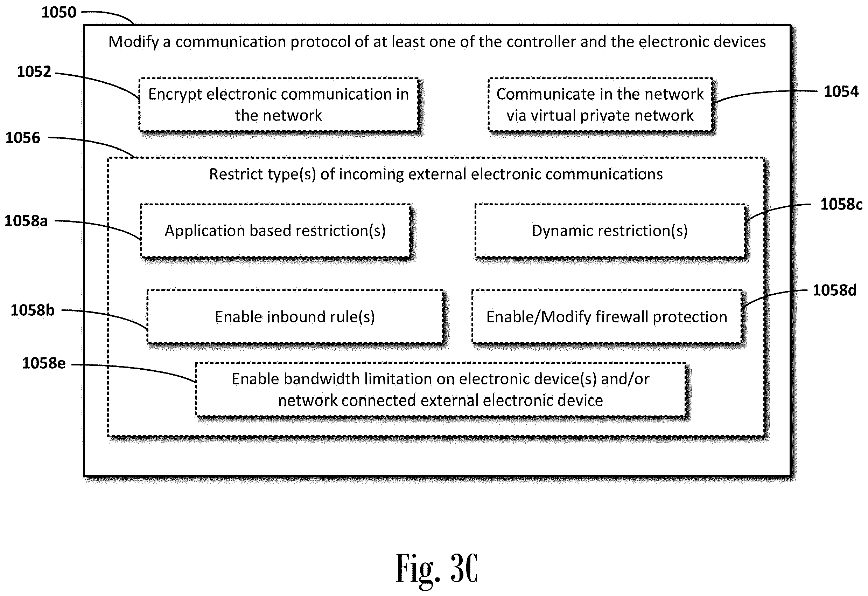

In an embodiment, the traffic communication protocol is instituted at 1050 in response to the results of the comparison at 1040 having a significant difference between at least one traffic property and its corresponding baseline (e.g., the traffic property being at least a predetermined amount/percentage different from the baseline value). A significant difference between a traffic property and its corresponding baseline can indicate an abnormality in the network. The institution of the traffic communication protocol at 1050 is discussed in more detail below with respect to Figure 3C.

Figure 3B illustrates a schematic diagram of the monitoring of electronic communications 1020 in Figure 3A, according to an embodiment. As discussed above the monitoring of the electronic communications 1020 can include the traffic property determination at 1030 and the traffic property comparison at 1040.

In an embodiment, the controller may be configured to continuously evaluate the external electrical communications received by the controller to continuously determine the traffic property/properties at 1030. In an embodiment, the controller may be configured to store in its memory a log of the external electrical communications, and then use the stored log of the external electrical communications to determine the traffic property/properties at 1030.

In an embodiment, the traffic properties are based on metadata of the external communications. For example, traffic properties in such embodiment are not based on the content of the electronic communications (e.g., is not based on the subject material of the electronic communications). For example, traffic properties can include, but are not limited to, count(s) of the external communications 1032a, bandwidth(s) of the external electronic communications 1032b, and like.

For example, the count(s) of the external communications 1032a may include the total number of the external communications transmitted over the network, counts of external communications received by each controller and electronic device in the network, a count of external communications received by the controller performing the method 1000 (e.g., performing the monitoring at 1020), counts of the external communications based on transmitting device (e.g., list of number of external communications by external IP address(es)), counts of the external communications based on application (e.g., list of number of external communications by the application that initiated each external communication).

For example, the bandwidth(s) of the external electronic communications at 1032b may include the bandwidth of all of the external electronic communications, the bandwidths of the external electronic communications received by each controller/electronic device (e.g., received by each controller, received by each controller and electronic device), the bandwidth of the external electronic communications received by the controller performing the method 1000 (e.g., performing the monitoring at 1020), bandwidths of the external electronic communications based on the transmitting device (e.g., list of bandwidths of external communications by external IP), bandwidths of the external communications based on application (e.g., list of bandwidths of external communications by the application that initiated each external communication).

At 1040, a controller compares the traffic property/properties to corresponding baseline traffic property/properties. For example, each traffic property is compared to a corresponding baseline traffic property. In an embodiment, the baseline traffic properties can be based on previous operation of the network. The baseline traffic properties can be based on previous secure operation of the network (e.g., based on operation of the network when no external intrusion is occurring, and the like). In an embodiment, baseline traffic properties can be stored in the controller (e.g., in the memory 155, in the storage 165).

The baseline traffic properties may be the traffic properties of a previous operation of the network over a set time period and/or the average traffic properties for a set time period in a previous operation of the network. (e.g., the total number of external communications received by the network in a previous 30-minute period, the average total number of external communications received for a 15-minute period based on a previous 24 hours of operation, or the like). In an embodiment, the baseline traffic property/properties may be continuously determined (e.g., by the controller) based on the preceding operation of the network (e.g., previous operation of the network being the preceding operation of the network). For example, a baseline traffic property may be the occurrence or average occurrence of the corresponding traffic property over a preceding time period (e.g., total of all of external communications received via the network over the preceding 1 hour, average total of external communications received for a 15-minute period based on the preceding 24 hours of operation of the network, or the like). A preceding time period for a baseline traffic property is longer than the time period for its corresponding traffic property to which it is compared.

The baseline traffic properties for the external communications can include one or more of, but is not limited to, baseline(s) for received external communications 1042a, baseline bandwidth(s) for the received external electronic communications 1042b, and the like.

For example, the baseline total(s) for external communications at 1042a may include one or more of, but is not limited to, an expected total of all external communications received via the network, an expected total of received external communications for a controller (e.g., for the controller performing the method 1000), an expected total of received external communications for an electronic device, an expected total of received external communications for each respective controller/electronic device, an expected total of received external communications from a single remote device (e.g., from a single IP address), an expected total of received external communications from a specific transmitting device (e.g., from a single external IP address, from the mobile device 110, or the like), and/or an expected total of received external communications initiated by a single remote application.

For example, the baseline bandwidth(s) for external electronic communications at 1042b may include, but is not limited to, an expected bandwidth for all external electronic communications in the network, an expected bandwidth for received external electronic communications for a controller in the network (e.g., for the controller performing the method 1000), an expected bandwidth for received external communications for an electronic device in the network, an expected bandwidth for received external communications for each respective controller/electronic device in the network, an expected bandwidth for external communications received from a single remote device (e.g., from a single remote IP address), expected bandwidth for external communications received from a specific transmitting device (e.g., from a single external IP address, from the mobile device 110, or the like), and/or an expected bandwidth of received external communications initiated by a single remote application (e.g., initiated by an application of the mobile device 110, or the like).

In an embodiment, one or more of the baseline traffic property/properties may include one or more predetermined upper limits (e.g., a predetermined upper limit for bandwidth of a single device in the network, a predetermined maximum for external communications received by a single device in the network, upper limit for external communications received from a single external IP, or the like).

Figure 3C illustrates a schematic diagram of the instituting of the communication protocol 1050 in Figure 3A, according to an embodiment. As similarly described above, the institution of the traffic communication protocol for at least one of the controller and the electronic devices at 1050 is in response to the comparison at 1040 having at least one traffic property that exceeds its corresponding baseline by at least a predetermined amount (e.g., a predetermined percentage, a predetermined number of external communications, or the like). As one non-limiting example, an expected total of received external communications for the controller can be 16 electronic communications for a 30-minute period and the predetermined amount is 25%, and the institution of the communication protocol at 1050 occurs in response to the controller receiving 20 external electronic communications in the preceding 30-minute period. A traffic property being greater than its corresponding baseline by at least a predetermined amount can be referred to as overstep (e.g., overstep by the traffic property, being overstepped).

As shown in Figure 3C, the institution of the communication protocol at 1050 may cause the controller and/or the electronic devices to one or more of, but is not limited to, encrypting the electronic communication in the network 1052, use a virtual private network for the electrical communication in the network 1054, and/or restrict one or more type(s) of incoming external electronic communications.

At 1054, the electronic communication within the network are encrypted. For example, the controller and the electronic devices in the network are configured at 1054 to encrypt their electronic communication via the network. Internal electronic communications are electronic communications between the controller and the other electronic devices in the network (e.g., between the controller and one of the electronic devices, between two of the electronic devices, between the controller and a second controller, and the like). At least the internal electronic communications in the network are encrypted at 1054. In an embodiment, one or more of the controller and/or the other electronic devices may be configured to also encrypt outbound electronic communications transmitted from the network (e.g., to also encrypt electronic communications transmitted from the controller to a device outside of the building automation system via the network and the Internet). For example, the controller may be configured to use encryption of the outbound electronic communications along with certificate authentication (e.g., authentication via SSL certificate, or the like).

At 1052, a virtual private network ("VPN") is used for the electrical communication in the network. For example, the controller is configured at 1052 to establish a virtual private network via the network between the controller and at least one of the other electronic devices. Electronic communications between the controller and the other electronic devices in the network (e.g., between the controller and one of the electronic devices, between two of the electronic devices, between the controller and a second controller, and the like) is through the VPN.

At 1056, one or more type(s) of incoming external communications are restricted. The restrictions at 1056 can be enforced by one or more of the electronic device(s) in the network. In an embodiment, the restrictions at 1056 may be determined by the controller and enforced by a network security device in the network (e.g., network security device 106).

The restrictions can be based on the traffic property/properties. For example, the restrictions can be based on one or more of the overstepped traffic property/properties (e.g., based on the traffic properties found to overstepped in the comparison at 1040). For example, the restrictions can be configured to cause one or more of the overstepped traffic property/properties to no longer be overstepped (e.g., no longer exceed its baseline by the predetermined amount). The restrictions at 1056 can be enacted by one or more the electronic device(s) in the network. Examples of the restricting of type(s) of incoming external communications restrictions at 1056 can include, but is not limited to, restricting incoming external electrical communications initiated by one or more application(s) 1058a, enabling one or more inbound rule(s) for future external electronic communications 1058b, dynamic restrictions 1058c, enable or modify firewall protection of the network 1058d, and/or enable bandwidth limitation(s) 1058e.

At 1058a, incoming external electrical communications initiated by a software application is restricted. The software application causing a portion of the external electrical communications monitored at 1020. For example, the external electrical communications caused by the software application can cause the overstep the traffic property/properties over its corresponding baseline. The software based restrictions 1058a reduces the electrical communications in the network. The software application based restriction at 1058a can advantageously reduce/stop malicious traffic in the network.

At 1058b, one or more inbound traffic rule(s) for incoming external communications are enabled. The enabled inbound traffic rule(s) stop incoming external communications from one or more external electronic devices (e.g., mobile device 110, an external remote electronic device communicating via the Internet 105, or the like).

At 1058c, dynamic restriction(s) are applied to one or more external IP address(es), port(s), and/or protocol(s). The one or more external IP address(es), port(s), and/or protocol(s) corresponding to the external communications monitored at 1020 (e.g., each of the IP address(es), port(s), and/or protocol(s) in the dynamic restrictions corresponding to a portion of the external communications monitored at 1020).. For example, remote electronic device(s) with said external IP address(es) transmitted the portion of the electrical communications monitored at 1020. For example, the dynamic restriction can release the external IP address(es) to block further communications from said external IP address(es). Said port(s) are port(s) used to receive at least a portion of the external electrical communications monitored at 1020. For example, dynamic restriction can restrict/prevent ingress through said port(s) to block further communications of the same type(s) as those in said portion of the external electrical communications monitored at 1020. Said protocol(s) corresponding to at least a portion of the external electrical communications monitored at 1020. For example, dynamic restriction can restrict/prevent ingress of specific electronic communications to block further communications of the same type(s) as those in said portion of the external electrical communications monitored at 1020. For example, the external communications from said external IP address(es), through said port(s), and/or transmitted in said protocol(s) can be causing the overstep of at least one of the traffic property/properties (e.g., causing the overstep found in the comparison at 1040).

The dynamic restriction at 1058c can help prevent/stop advanced HTTP attacks on the network of the building automation system. The dynamic restriction may also lock one or more external IP address(es), port(s), and/or protocol(s) that correspond to authorized remote device/user. This can ensure that authorized communications are still allowed into/through the network.

At 1058d, firewall protection is enabled or modified based on the traffic property/properties. Said traffic property/properties can be one or more of those traffic property/properties that overstepped at 1040. In an embodiment, the enabling/modifying of the firewall protection at 1058d can include requiring the incoming external electronic communications to be transmitted via a TCP electronic connection (e.g., requiring all external electronic devices to connect to the network 101 via a TCP electronic connection, requiring electronic connections from the Internet 105 to be TCP connections, or the like).

At 1058e, a bandwidth limitation is enabled for at least one of the electronic devices in the network and/or external electronic device(s) transmitting to the network. Said external electronic device(s) transmitting a portion of the external electronic communications monitored at 1020. For example, the overstepping of at least one of the traffic property/properties at 1040 being caused by the portion of the external electronic communications transmitted by the external device(s). Said electronic device(s) in the network each received a portion of the external electrical communications monitored at 1020. For example, a bandwidth limitation for an electronic device in the network can be for those electronic device(s) that received a portion of the external electrical communications which caused the overstep of at least one of the traffic property/properties at 1040. The bandwidth limitation at 1058e can help prevent/stop a traffic overload of the network.

### Aspects:

Any of Aspects 1 - 9 may be combined with any of Aspects 10 - 18.
Aspect 1. A method of providing reactive network security for a building automation system, the building automation system including a controller and a network of electronic devices connected in electronic communication, the method comprising: monitoring, by the controller, external electronic communications received by the network, which includes: comparing, by the controller, at least one traffic property of the external electronic communications to a corresponding baseline traffic property; and instituting, by the controller, a traffic communication protocol for at least one of the controller and the electronic devices based on said comparison, the instituting of the traffic communication protocol causes one or more of: restricting of at least one type of incoming external electronic communication to the network, using a virtual private network to communicate within the network, and encrypting of the electronic communication within the network.
Aspect 2. The method of Aspect 1, wherein the monitoring, by the controller, of the external electronic communications includes: determining, by the controller, the at least one traffic property of the electronic communications.
Aspect 3. The method of any one of Aspects 1 and 2, wherein the monitoring, by the controller of the external electronic communications is continuous monitoring.
Aspect 4. The method of any one of Aspects 1-3, wherein a primary function of the controller is operating the building automation system.
Aspect 5. The method of any one of Aspects 1-4, wherein the monitoring includes the restricting of the type of incoming electronic communication, said restricting including at least one of: restricting incoming external electrical communications initiated by a software application that caused a portion of the external electrical communications monitored by the controller, enabling an inbound traffic rule for incoming external electrical communications based on the at least one traffic property, enabling a dynamic restriction of at least one external internet protocol address, port, and protocol that corresponds to the electrical communications monitored by the controller, enabling or modifying a firewall protection based on the at least one traffic property, and enabling a bandwidth limitation for an electric device that is one of the electronic devices in the network and an external electronic device that transmitted at least a portion of the external electrical communications monitored by the controller.
Aspect 6. The method of any one of Aspects 1-5, wherein the at least one traffic properties of the electronic communications is metadata of the external electronic communications.
Aspect 7. The method of any one of Aspects 1 - 6, wherein the instituting, by the controller, of the traffic communication protocol is in response to the at least one traffic property of the external electronic communications exceeding the corresponding baseline traffic property by a predetermined amount.
Aspect 8. The method of Aspect 7, wherein the instituting, by the controller, of the traffic communication protocol is configured to reduce the at least one traffic property to no longer exceed the corresponding baseline traffic property by the predetermined amount.
Aspect 9. The method of any one of Aspects 7 and 8, wherein the at least one traffic property of the electronic communications includes a count of the electronic communications received by one of the electronic devices in a preceding time period, and the corresponding baseline traffic property is an expected total of the electronic communications received by the one of the electronic devices in said time period, and the instituting is in response to the count of the electronic communications received by one of the electronic devices exceeding the expected total of the electronic communications received by the one of the electronic devices by the predetermined amount.
Aspect 10. A building automation system comprising: a controller; a plurality of electronic devices; and a network, the plurality of electronic devices and the controller being in electronic communication via the network, wherein the controller is configured to: monitor external electronic communications received by the network, which includes comparing at least one traffic property of the external electronic communications to a corresponding baseline traffic property, and institute a traffic communication protocol for at least one of the controller and the electronic devices based on said comparison, the instituting of the traffic communication protocol is configured to cause one or more of: restricting of at least one type of incoming external electronic communication to the network, using a virtual private network to communicate within the network, and encrypting of the electronic communication within the network.
Aspect 11. The building automation system of Aspect 10, wherein the monitoring, by the controller, of the external electronic communications includes: the controller determining the at least one traffic property of the electronic communications.
Aspect 12. The building automation system of any one of Aspects 10 and 11, wherein the controller is configured to continuously monitor the external electronic communications received by the network.
Aspect 13. The building automation system of any one of Aspects 10 - 12, wherein a primary function of the controller is operating the building automation system.
Aspect 14. The building automation system of any one of Aspects 10 - 13, wherein the controller is configured to institute the traffic communication protocol to at least cause the restricting of the type of incoming electronic communication, the restricting of the type of incoming electronic communication includes at least one of: restricting incoming external electrical communications initiated by a software application that causes a portion of the external electrical communications during the monitoring by the controller, enabling an inbound traffic rule for incoming external electrical communications based on the at least one traffic property, dynamic restriction of at least one external internet protocol address, port, and protocol that corresponds to the electrical communications monitored by the controller, enabling or modifying a firewall protection based on the at least one traffic property, and enabling a bandwidth limitation for an electric device that is one of the electronic devices in the network and an external electronic device that transmits at least a portion of the external electrical communications during the monitoring by the controller.
Aspect 15. The building automation system of any one of Aspects 10 - 14, wherein the at least one traffic properties of the electronic communications is metadata of the external electronic communications.
Aspect 16. The building automation system of any one of Aspects 10 - 15, wherein the controller is configured to provide the instituting of the traffic communication protocol in response to the at least one traffic property of the external electronic communications exceeding the corresponding baseline traffic property by a predetermined amount.
Aspect 17. The building automation system of Aspect 16, wherein the instituting, by the controller, of the traffic communication protocol is configured to reduce the at least one traffic property to no longer exceed the corresponding baseline traffic property by the predetermined amount.
Aspect 18. The building automation system of any one of Aspects 16 and 17, wherein the at least one traffic property of the electronic communications includes a count of the electronic communications received by one of the electronic devices in a preceding time period, and the corresponding baseline traffic property is an expected total of the electronic communications received by the one of the electronic devices in said time period, and the instituting is in response to the count of the electronic communications received by the one of the electronic devices exceeding the expected total of the electronic communications received by the one of the electronic devices by the predetermined amount.

The terminology used herein is intended to describe particular embodiments and is not intended to be limiting. The terms "a," "an," and "the" include the plural forms as well, unless clearly indicated otherwise. The terms "comprises" and/or "comprising," when used in this Specification, specify the presence of the stated features, integers, steps, operations, elements, and/or components, but do not preclude the presence or addition of one or more other features, integers, steps, operations, elements, and/or components. In an embodiment, "connected" and "connecting" as described herein can refer to being "directly connected" and "directly connecting".

With regard to the preceding description, it is to be understood that changes may be made in detail, especially in matters of the construction materials employed and the shape, size, and arrangement of parts without departing from the scope of the present disclosure. This Specification and the embodiments described are exemplary only, with the true scope and spirit of the disclosure being indicated by the claims that follow.

## Claims

1. A method of providing reactive network security for a building automation system, the building automation system including a controller and a network of electronic devices connected in electronic communication, the method comprising:
monitoring, by the controller, external electronic communications received by the network, which includes:
comparing, by the controller, at least one traffic property of the external electronic communications to a corresponding baseline traffic property; and
instituting, by the controller, a traffic communication protocol for at least one of the controller and the electronic devices based on said comparison, the instituting of the traffic communication protocol causes one or more of:
restricting of at least one type of incoming external electronic communication to the network,
using a virtual private network to communicate within the network, and
encrypting of the electronic communication within the network.

2. The method of claim 1, wherein the monitoring, by the controller, of the external electronic communications includes:
determining, by the controller, the at least one traffic property of the electronic communications and/or,
wherein the monitoring, by the controller of the external electronic communications is continuous monitoring, and/or
wherein a primary function of the controller is operating the building automation system.

3. The method of claim 1 or 2, wherein the monitoring includes the restricting of the type of incoming electronic communication, said restricting including at least one of:
restricting incoming external electrical communications initiated by a software application that caused a portion of the external electrical communications monitored by the controller,
enabling an inbound traffic rule for incoming external electrical communications based on the at least one traffic property,
enabling a dynamic restriction of at least one external internet protocol address, port, and protocol that corresponds to the electrical communications monitored by the controller,
enabling or modifying a firewall protection based on the at least one traffic property, and
enabling a bandwidth limitation for an electric device that is one of the electronic devices in the network and an external electronic device that transmitted at least a portion of the external electrical communications monitored by the controller.

4. The method of claim 1, 2 or 3, wherein the at least one traffic properties of the electronic communications is metadata of the external electronic communications.

5. The method of any preceding claim, wherein the instituting, by the controller, of the traffic communication protocol is in response to the at least one traffic property of the external electronic communications exceeding the corresponding baseline traffic property by a predetermined amount.

6. The method of claim 5, wherein the instituting, by the controller, of the traffic communication protocol is configured to reduce the at least one traffic property to no longer exceed the corresponding baseline traffic property by the predetermined amount.

7. The method of claim 5 or 6, wherein
the at least one traffic property of the electronic communications includes a count of the electronic communications received by one of the electronic devices in a preceding time period, and the corresponding baseline traffic property is an expected total of the electronic communications received by the one of the electronic devices in said time period, and
the instituting is in response to the count of the electronic communications received by one of the electronic devices exceeding the expected total of the electronic communications received by the one of the electronic devices by the predetermined amount.

8. A building automation system comprising:
a controller;
a plurality of electronic devices; and
a network, the plurality of electronic devices and the controller being in electronic communication via the network,
wherein the controller is configured to:
monitor external electronic communications received by the network, which includes comparing at least one traffic property of the external electronic communications to a corresponding baseline traffic property, and
institute a traffic communication protocol for at least one of the controller and the electronic devices based on said comparison, the instituting of the traffic communication protocol is configured to cause one or more of:
restricting of at least one type of incoming external electronic communication to the network,
using a virtual private network to communicate within the network, and
encrypting of the electronic communication within the network.

9. The building automation system of claim 8, wherein the monitoring, by the controller, of the external electronic communications includes:
the controller determining the at least one traffic property of the electronic communications.

10. The building automation system of claim 8 or 9, wherein the controller is configured to continuously monitor the external electronic communications received by the network, and/or wherein a primary function of the controller is operating the building automation system.

11. The building automation system of claim 8, 9 or 10, wherein the controller is configured to institute the traffic communication protocol to at least cause the restricting of the type of incoming electronic communication, the restricting of the type of incoming electronic communication includes at least one of:
restricting incoming external electrical communications initiated by a software application that causes a portion of the external electrical communications during the monitoring by the controller,
enabling an inbound traffic rule for incoming external electrical communications based on the at least one traffic property,
dynamic restriction of at least one external internet protocol address, port, and protocol that corresponds to the electrical communications monitored by the controller,
enabling or modifying a firewall protection based on the at least one traffic property, and
enabling a bandwidth limitation for an electric device that is one of the electronic devices in the network and an external electronic device that transmits at least a portion of the external electrical communications during the monitoring by the controller.

12. The building automation system of any one of claims 8 to 11, wherein the at least one traffic properties of the electronic communications is metadata of the external electronic communications.

13. The building automation system of any one of claims 8 to 12, wherein the controller is configured to provide the instituting of the traffic communication protocol in response to the at least one traffic property of the external electronic communications exceeding the corresponding baseline traffic property by a predetermined amount.

14. The building automation system of claim 13, wherein the instituting, by the controller, of the traffic communication protocol is configured to reduce the at least one traffic property to no longer exceed the corresponding baseline traffic property by the predetermined amount.

15. The building automation system of claim 13 or 14, wherein
the at least one traffic property of the electronic communications includes a count of the electronic communications received by one of the electronic devices in a preceding time period, and the corresponding baseline traffic property is an expected total of the electronic communications received by the one of the electronic devices in said time period, and
the instituting is in response to the count of the electronic communications received by the one of the electronic devices exceeding the expected total of the electronic communications received by the one of the electronic devices by the predetermined amount.
